# FASCICULE DE BREVET EUROPEEN

(11) **EP 1 408 102 B1**
(45) Date de publication et mention de la délivrance du brevet: **28.07.2010**
(21) Numéro de dépôt: 03292376.5
(22) Date de dépôt: 26.09.2003
(51) Int. Cl.: C10L 3/10, B01D 53/14

(54) **Procédé de desacidification d'un gaz naturel**
Verfahren zur Entsäurung von Erdgas
Process for de-acidification of natural gas

(30) Priorité: 07.10.2002 FR 0212440
(43) Date de publication de la demande: 14.04.2004
(73) Titulaire: Institut Français du Pétrole, 95852 Rueil-Malmaison Cedex (FR)
(72) Inventeur: Rojey, Alexandre, 92500 Rueil Malmaison (FR); Lecomte, Fabrice, 75020 Paris (FR); Lemaire, Eric, 69480 Morance (FR)

(56) Documents cités:
- FR-A- 2 743 083
- FR-A- 2 814 379
- US-A- 4 853 012
- US-A- 6 001 153
- US-A1- 2002 104 438

## Description

La présente invention se rapporte au domaine de la déshydratation, la désacidification et le dégazolinage du gaz naturel, en utilisant un mélange d'eau, d'amine et de méthanol.
Le traitement d'un gaz naturel requiert la déshydratation, le dégazolinage lorsque le gaz contient des hydrocarbures condensables, et la désacidification de ce gaz lorsque la teneur en gaz acides est trop élevée.
Il est possible de déshydrater et de dégazoliner un gaz naturel en le réfrigérant en présence de méthanol pour éviter la formation de glace ou d'hydrates.
Il est connu de l'art antérieur d'utiliser des solvants chimiques, tels que les amines, et des solvants physiques, tels que le méthanol ou le diméthyléther du triéthylèneglycol (DMETEG), pour réaliser l'opération de désacidification. Les solvants chimiques présentent l'avantage d'absorber les gaz acides, même à des teneurs très faibles dans le gaz à traiter. Il permettent ainsi d'obtenir des spécifications poussées sur le gaz sortant de l'unité de désacidification, c'est à dire d'obtenir un gaz contenant moins que 1 % molaire de gaz acides. Les solvants physiques permettent d'absorber des quantités importantes de gaz acides lorsque les teneurs en gaz acides sont élevées. Cependant les solvants physiques permettent plus difficilement d'obtenir des spécifications poussées sur le gaz traité. Il est également connu d'utiliser un mélange de solvant physique et de solvant chimique, afin de pouvoir traiter des gaz fortement acides, en réalisant des spécifications poussées sur le gaz traité. Il est notamment connu d'utiliser un mélange d'amine telle que la DIPA (diisopropanolamine) ou la MDEA (méthyldiéthanolamine) avec un solvant physique relativement lourd tel que le Sulfolane utilisé par la compagnie Shell.
Le document FR 2 743 083 propose un procédé de déshydratation, désacidification et dégazolinage d'un gaz naturel utilisant un mélange de solvants physique et chimique.

La présente invention propose de perfectionner le procédé proposé par le document FR 2 743 083.

Ainsi, la présente invention concerne un procédé de désacidification d'un gaz naturel comportant des gaz acides, selon la revendication 1.

Le deuxième solvant peut contenir moins de 1 % en poids de méthanol.
A l'étape d) du procédé, le deuxième solvant peut être prélevé en fond de la colonne de distillation.
A l'étape e) du procédé, le quatrième solvant peut être prélevé en un point situé entre le fond et la tête de la colonne de distillation. A l'étape e), le quatrième solvant peut également être prélevé sous forme gazeuse en tête de la colonne de distillation et être refroidi.
A l'étape c) du procédé, le solvant chargé en gaz acide obtenu à l'étape
a) peut être détendu successivement à deux niveaux de pression.
Le procédé selon l'invention peut comporter les étapes:
f) on refroidit le gaz obtenu à l'étape b) pour obtenir un gaz pauvre en méthanol, une phase liquide contenant des hydrocarbures et une phase aqueuse comprenant du méthanol,
g) avant l'étape a), on met en contact une partie du gaz naturel avec la phase aqueuse obtenu à l'étape f).

A l'étape d) du procédé, la première fraction du solvant en partie régénéré obtenu à l'étape c) peut être détendue, puis chauffée par échange de chaleur avec le deuxième solvant obtenu à l'étape d).

Selon le procédé de l'invention, une troisième fraction du solvant en partie régénéré obtenue à l'étape c) peut être introduite dans la colonne de distillation, le point d'introduction dans la colonne de distillation de la première fraction du solvant en partie régénéré étant différent du point d'introduction dans la colonne de distillation de la troisième fraction du solvant en partie régénéré.

L'amine peut être choisie parmi les composés: diéthanolamine (DEA), méthyldiéthanolamine (MDEA), méthyléthanolamine (MEA), triéthanolamine (TEA), diglycolamine (DGA) et diisopropanolamine (DIPA), ainsi qu'un mélange de ces amines.

Le procédé selon l'invention peut comporter les étapes suivantes:
h) on refroidit la phase gazeuse comportant des gaz acides obtenue à l'étape d) pour obtenir une phase liquide et une phase gazeuse riche en gaz acides, la phase liquide étant séparée de la phase gazeuse dans un ballon de séparation,
i) on refroidi la phase gazeuse riche en gaz acides obtenue à l'étape h) et les gaz acides libérés à l'étape c) pour obtenir une phase liquide et une phase gazeuse,
j) on introduit la phase liquide obtenue à l'étape i) dans le ballon de séparation.

Les conditions opératoires du procédé selon l'invention peuvent être:
- les étapes a) et b) sont réalisées à une température comprise entre 20°C et 80°C et à une pression comprise entre 3 MPa absolu et 10 MPa absolu,
- à l'étape c), le solvant chargé en gaz acides obtenu à l'étape a) est détendu à une pression comprise entre 0,1 MPa absolu et 1 MPa absolu,
- l'étape d) est réalisée à une température comprise entre 30°C et 130°C et à une pression comprise entre 0,1 MPa absolu et 1 MPa absolu.

D'autres caractéristiques et avantages de l'invention seront mieux compris et apparaîtront clairement à la lecture de la description faites ci-après à titre d'exemple en se référant aux dessins parmi lesquels :
- la figure 1 représente schématiquement le procédé selon l'invention,
- les figures 2 et 3 représentent schématiquement des variantes du procédé selon l'invention.

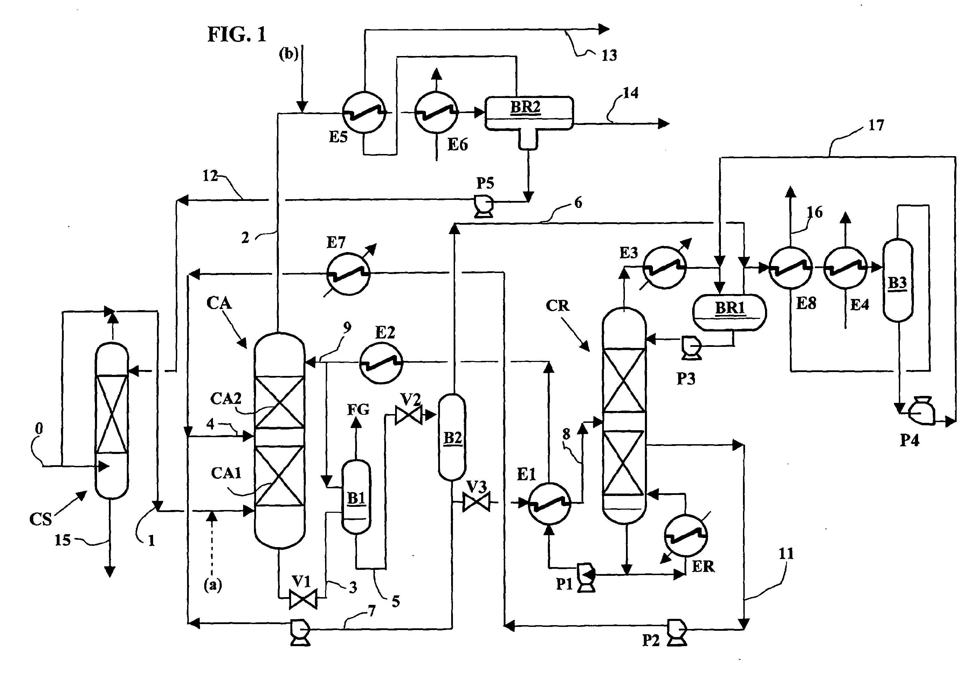

Sur la figure 1, le gaz naturel à traiter arrive par le conduit 0. Il contient, par exemple, du méthane, de l'éthane, du propane, du butane ainsi que des hydrocarbures plus lourds, de l'eau et des gaz acides tels que de l'H₂S et du CO₂ et éventuellement des mercaptans.
Une fraction de ce gaz est envoyée dans la colonne de contact CS dans laquelle elle est mise en contact à contre-courant avec une solution de méthanol arrivant par le conduit 12. Au fond de la colonne CS, on élimine par le conduit 15 une phase aqueuse substantiellement débarrassée de méthanol. Le gaz chargé en méthanol récupéré en tête de la colonne CS est mélangé avec le gaz naturel qui n'a pas traversé la colonne CS. Ce mélange de gaz est envoyé par le conduit 1 dans la colonne de contact CA.
Le gaz circulant dans le conduit 1 est éventuellement additionné d'un appoint de méthanol arrivant par le conduit (a), puis est envoyé dans la colonne de contact CA. La colonne CA comporte deux sections d'absorption CA1 et CA2. Dans la première section CA1, le gaz arrivant par le conduit 1 est mis en contact à contre courant avec un solvant composé d'un mélange d'eau, de méthanol et d'amine, arrivant par le conduit 4. Le gaz sortant de la première section CA1 est mis en contact à contre-courant dans la deuxième section CA2 avec un solvant composé d'un mélange d'eau, de méthanol et d'amine, arrivant par le conduit 9. La teneur en méthanol (en % molaire) du solvant arrivant par le conduit 9 est plus faible que la teneur en méthanol (en % molaire) du solvant arrivant par le conduit 4. Au fond de la colonne CA, on évacue par le conduit 3 un solvant, chargé en gaz acides. En tête de la colonne CA, on récupère par le conduit 2, un gaz substantiellement débarrassé des gaz acides et chargé en méthanol. Un appoint de méthanol arrivant par le conduit (b) permet d'augmenter la teneur en méthanol du gaz circulant dans le conduit 2.
Le gaz sortant de la colonne CA par le conduit 2 est refroidi dans les échangeurs de chaleur indirect E5 et E6, puis est envoyé dans le ballon séparateur BR2. Dans le ballon BR2, on sépare une phase gazeuse substantiellement débarrassée de méthanol évacuée par le conduit 13 après échange de chaleur dans l'échangeur E5, une phase liquide comprenant des hydrocarbures évacuée par le conduit 14 et une phase aqueuse comprenant du méthanol introduite par l'intermédiaire de la pompe P5 et du conduit 12 dans la colonne CS.
Le solvant évacué par le conduit 3 est détendu à un premier niveau de pression à travers la vanne V1 en libérant une phase gazeuse qui contient au moins une partie des hydrocarbures qui ont pu être coabsorbés dans le solvant dans la colonne CA. Les phases gazeuse et liquide obtenues par détente du solvant sont séparées dans le ballon de séparation B1. La phase liquide, comprenant du solvant, est évacuée du ballon B1 par le conduit 5. La phase gazeuse forme un gaz combustible FG, couramment appelé "fuel gas". La phase gazeuse peut éventuellement être débarrassée des gaz acides qu'elle contient par lavage dans le ballon B1 avec une fraction du solvant circulant dans le conduit 9. Le lavage peut également être réalisé dans tout autre système approprié connu de l'homme de l'art.
Le solvant circulant dans le conduit 5 est détendu à travers la vanne de détente V2. Les gaz acides libérés par détente sont séparés du solvant liquide dans le ballon de séparation B2. Ainsi, le solvant liquide récupéré en fond du ballon B2 est partiellement régénéré. Les gaz acides sont évacués par le conduit 6. Une première partie du solvant liquide est évacuée par le conduit 7 puis est mélangée avec le solvant circulant dans le conduit 11. Ce mélange de solvant est introduit par le conduit 4 dans la colonne CA. Une deuxième partie du solvant liquide est détendue à travers la vanne de détente V3, passe ensuite dans l'échangeur E1, dans lequel elle est chauffée par échange de chaleur indirect, puis est envoyée par le conduit 8 dans la colonne de régénération CR. Dans la colonne CR, le solvant est régénéré par distillation. Le rebouilleur ER réchauffe le solvant liquide disponible en fond de la colonne CR. Le fait de régénérer la première partie du solvant circulant dans le conduit 7 uniquement par détente permet de limiter la quantité de solvant traitée par la colonne CR, et par conséquent, de limiter l'énergie nécessaire pour régénérer le solvant issu de la colonne CA.
Le solvant régénéré, c'est à dire substantiellement dépourvu de gaz acides (la teneur en gaz acides peut être inférieure à 1 % molaire), est récupéré en fond de la colonne CR. Le solvant régénéré est refroidi par échange de chaleur indirect avec le solvant circulant dans le conduit 8 dans l'échangeur E1, puis est refroidi dans l'échangeur E2, puis est introduit dans la colonne CA par le conduit 9.
Le conduit 11 soutire un solvant en un point intermédiaire de la colonne CR, c'est à dire en un point situé au dessus du point de prélèvement du solvant régénéré par le conduit 9. Le solvant circulant dans le conduit 11 est pompé par la pompe P2, refroidi dans l'échangeur E7, mélangé avec le solvant circulant dans le conduit 7. Ce mélange de solvant est introduit par le conduit 4 dans la colonne CA. La position du point de prélèvement du conduit 11 sur la colonne CR dépend de la composition du solvant que l'on désire introduire dans la colonne CA par le conduit 4. Plus le point de prélèvement est situé proche de la tête de la colonne CR, plus le solvant circulant dans le conduit 11 est riche en méthanol. Ainsi, on peut ajuster la composition du solvant introduit par le conduit 4 dans la colonne CA en fonction de la position du point de prélèvement du conduit 11 sur la colonne CR. De plus, le fait de soutirer un solvant riche en méthanol de la colonne de régénération CR permet d'augmenter la concentration d'amine du solvant prélevé en fond de la colonne CR. En effet, la quantité de méthanol contenue dans le solvant soutiré en un point intermédiaire par le conduit 11 ne sera pas contenue dans le solvant soutiré par le conduit 9.
Il a été également découvert qu'il est possible en utilisant le procédé selon l'invention, d'obtenir en fond de la colonne de régénération CR un solvant à très faible teneur en méthanol. Dans ces conditions, on obtient en tête de la colonne d'absorption CA un gaz traité substantiellement dépourvu de méthanol. Ce gaz traité ne nécessite pas de traitement par refroidissement pour récupérer le méthanol qu'il contient. Par exemple il est possible d'obtenir en fond de la colonne CR un solvant régénéré contenant moins de 1 % en poids de méthanol. Le méthanol ainsi séparé du solvant est évacué en tête de la colonne de régénération et envoyé en tête de la première section d'absorption CA1 par les conduits 11 et 4. Pour réaliser une telle séparation, il faut se placer à une température et une pression permettant de rebouillir un liquide composé d'amine et substantiellement dépourvu de méthanol. Par exemple, si la pression de la colonne CR est proche de la pression atmosphérique, c'est à dire comprise entre 0,1 MPa et 1 MPa absolu, la température en fond de la colonne CR peut être comprise entre 110°C et 130°C.
La phase vapeur évacuée en tête de la colonne de régénération CR est refroidie dans le condenseur E3. Après refroidissement, la phase liquide riche en méthanol est séparée des gaz acides dans le ballon BR1. La phase liquide riche en méthanol est envoyée en tête de la colonne CR par l'intermédiaire de la pompe P3. Les gaz acides issus du ballon BR1 sont mélangés avec les gaz acides circulant dans le conduit 6. Le mélange de gaz acides est refroidi dans les échangeurs E8 et E4, puis introduit dans le ballon B3. La phase liquide riche en méthanol obtenue en fond du ballon B3 est introduite dans le ballon BR1 par l'intermédiaire de la pompe P4 et du conduit 17. Les gaz acides obtenus en tête du ballon B3 sont réchauffés dans l'échangeur E8 par échange de chaleur avec le mélange de gaz acides provenant du ballon BR1 et du conduit 6, puis sont évacués par le conduit 16. Les gaz acides évacués par le conduit 16 peuvent être liquéfiés et injectés dans le sous-sol, par exemple dans un puits pétrolier.

Le procédé selon l'invention permet d'une part de régénérer une partie du solvant par simple détente, ce qui est économique, et d'autre part de pouvoir ajuster les teneurs en méthanol dans les deux sections d'absorption CA1 et CA2. Ainsi, le procédé selon l'invention permet de traiter un gaz fortement acide car pendant l'étape a), le premier solvant riche en méthanol permet d'absorber la majorité des gaz acides, et pendant l'étape b), le solvant riche en amine permet d'absorber les gaz acides restants.

Un exemple de mise en oeuvre du procédé selon l'invention tel qu'il a été défini ci-dessus est donné ci-après en relation avec la figure 1. Le gaz de charge arrive par le conduit 0 à une température de 45°C et une pression absolue de 7,6 MPa avec la composition suivante (en pourcentage molaire):
H₂O: 0,14 %
N₂: 1,09 %
CO₂: 3,84 %
H₂S: 21,78 %
C₁: 52,85 %
C₂: 11,40 %
C₃: 6,00 %
iC₄: 0,82 %
C₄: 1,61 %
C₅: 0,33 %
C₆₊: 0,11 %
RSH: 0,03 %

Dans la colonne CS, le gaz est mis en contact avec la solution aqueuse de méthanol arrivant par le conduit 12 et ressort de la colonne CS chargé en méthanol. Il est alors introduit dans la colonne d'absorption CA.
Après avoir été lavé par un solvant riche en méthanol arrivant par le conduit 4 en tête de la section CA1, ce gaz est lavé par un solvant riche en diéthanolamine (DEA) arrivant par le conduit 9 en tête de la section CA2. Le gaz ressort débarrassé de ses gaz acides et est refroidi à -30°C dans les échangeurs E5 et E6 après ajout de méthanol par le conduit (b). On récupère dans le ballon triphasique BR2 une phase gaz désacidifiée, déshydratée et dégazolinée évacuée par le conduit 13, une phase hydrocarbure liquide évacuée par le conduit 14 et une phase aqueuse méthanolée évacué par le conduit 12 vers la colonne CS pour récupérer le méthanol par stripping avec une fraction du gaz arrivant par le conduit 0. On évacue par le conduit 15 en fond de la colonne CS une phase aqueuse pauvre en méthanol (98,91 % molaire d'H₂O).
Le gaz traité évacué par le conduit 13 contient 4,4 ppm de H₂S et 2,9 ppm de CO₂.
Le solvant chargé en gaz acides récupéré en fond de la colonne CA est détendu à 2,6 MPa absolu pour libérer les hydrocarbures coabsorbés. Ceux-ci sont lavés dans le ballon B1 par une fraction de solvant régénérée soutirée du conduit 9. Le solvant débarrassé des hydrocarbures dissous circulant dans le conduit 5 est détendu à une pression de 0,4 MPa absolu à travers la vanne V2 pour libérer une partie des gaz acides dissous qui sont envoyés en tête de la colonne CR par le conduit 6. Une fraction du solvant partiellement régénéré est renvoyée en tête de la première section de CA1 par le conduit 7 alors que l'autre fraction est envoyée à la colonne de régénération CR après détente à 0,24 MPa absolu à travers la vanne V3 puis réchauffage dans l'échangeur E1. Un débit de solvant régénéré à faible concentration en méthanol (11,40 % molaire) est récupéré en fond de la colonne CR et envoyé en tête de la colonne CA. Une fraction de solvant à forte concentration en méthanol (19,93 % molaire) est soutirée de la colonne CR par le conduit 11 et est envoyée avec le solvant circulant dans le conduit 7 en tête de la section inférieure de CA1 après refroidissement par E7. Le point de soutirage du conduit 11 est situé entre le fond de la colonne CR et le point d'alimentation de la colonne CR par le conduit 8.

Le solvant envoyé en tête de la colonne d'absorption CA par le conduit 9 contient en fraction molaire 0,26 % de H₂S et 0,08 % de CO₂. Le solvant évacué du ballon de séparation B1 et envoyé à la colonne d'absorption par le conduit 7 contient en fraction molaire 1,93 % de CO₂ et 4,44 % de H₂S.
Enfin, les gaz acides en tête de la colonne de régénération CR contenant du méthanol et de l'eau sont refroidis à température ambiante par l'échangeur E3 pour générer un reflux renvoyé vers la colonne CR par la pompe P3. Les gaz acides en sortie de BR1 sont refroidis dans E8 et E4. La fraction de méthanol qu'il contiennent est recyclée vers BR1 et les gaz acides sont évacués par le conduit 16 après réchauffage dans l'échangeur E8.

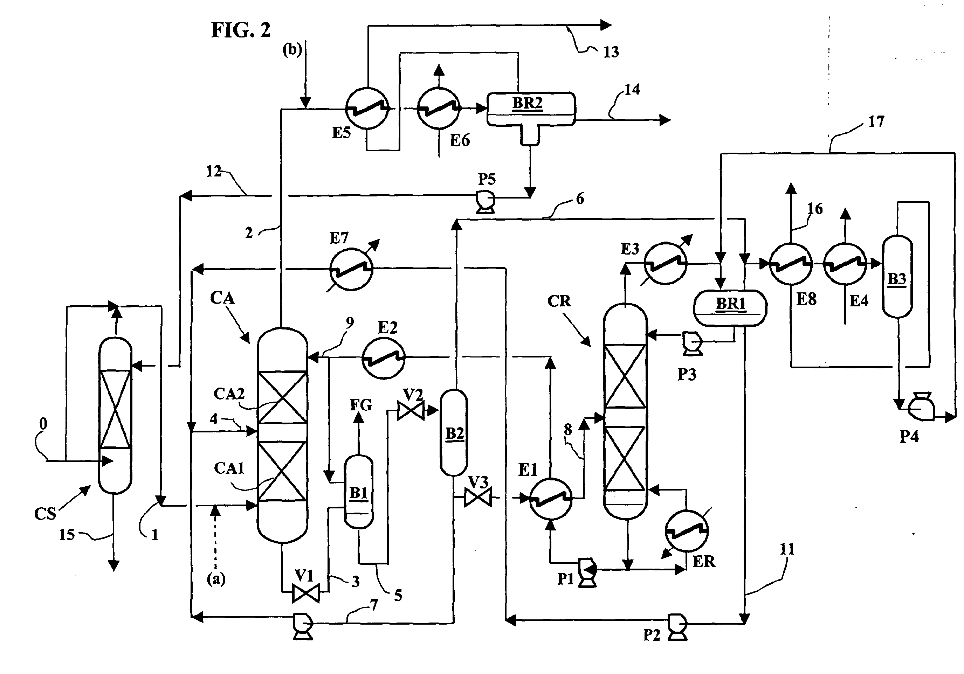

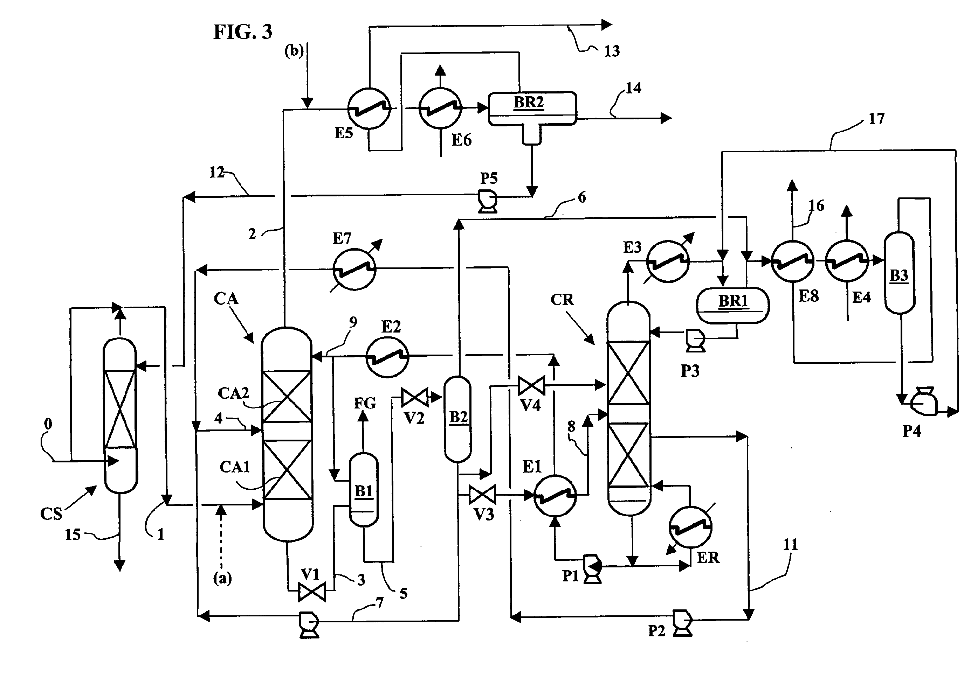

Les éléments des figures 2 et 3 ayant les mêmes numéros de référence que sur la figure 1 désignent des éléments identiques.

Sur la figure 2, par rapport à la figure 1, le point de prélèvement du conduit 11 a été modifié. Le conduit 11 prélève une fraction de la phase liquide riche en méthanol obtenue dans le ballon BR1. Cette fraction est mélangée avec le solvant circulant dans le conduit 7, le mélange étant introduit en tête de la section d'absorption CA1.

Sur la figure 3, par rapport à la figure 1, le solvant liquide issu du ballon B2 est séparé en trois parties. Une première partie du solvant est mélangée avec le solvant circulant dans le conduit 11, le mélange étant introduit en tête de la section d'absorption CA1. Une deuxième partie du solvant est détendue à travers la vanne V3, puis échange de la chaleur dans E1 avec le solvant régénéré circulant dans le conduit 9, puis est introduit dans la colonne CR. Une troisième partie du solvant est détendue à travers la vanne V4, puis est introduite dans la colonne CR à un niveau situé au dessus du niveau d'introduction de la deuxième partie de solvant dans la colonne CR.

Les colonnes d'absorption CA et de régénération CR peuvent être à plateaux ou à garnissages. On peut utiliser différents types de plateaux et/ou de garnissages, en vrac et/ou structurés.
Les échangeurs de chaleur E1 à E8 peuvent être à tubes et calandre, ou à plaques, soit en aluminium brasé, soit en acier inoxydable.

Sans sortir du cadre de l'invention, la régénération peut être réalisée dans deux ou plusieurs colonnes de distillation opérant dans des conditions de pression et de température différentes. Il est ainsi possible par exemple d'obtenir des fractions de gaz acides de compositions différentes, par exemple une fraction concentrée en CO₂ et une fraction concentrée en H₂S.

Différentes amines peuvent être utilisées dans le procédé selon l'invention. On peut notamment utiliser des amines secondaires telles que la diéthanolamine (DEA) ou des amines tertiaires telles que la méthyldiéthanolamine (MDEA). Il est possible d'utiliser ces amines pures ou en mélange. Il est également possible d'ajouter différents additifs visant à limiter la dégradation de l'amine par oxydation ou à limiter le moussage.

Il est avantageux d'utiliser une amine sélective pour l'H₂S. Ainsi, on sépare le CO₂ contenu dans le mélange de solvants lors de la détente à travers les vannes V1 et V2. L'H₂S est séparé du mélange de solvants au cours d'une régénération par distillation.

## Revendications

1. Procédé de désacidification d'un gaz naturel comportant des gaz acides dans lequel on effectue les étapes:
a) on met en contact le gaz naturel avec un premier solvant comprenant du méthanol, de l'eau et une amine, obtenu à l'étape e) et avec un troisième solvant chargé en gaz acides obtenu à l'étape b) pour obtenir un gaz chargé en méthanol et un solvant chargé en gaz acides,
b) on met en contact le gaz obtenu à l'étape a) avec un deuxième solvant comprenant du méthanol, de l'eau et une amine, obtenu à l'étape d) pour obtenir un gaz en partie débarrassé des gaz acides et le troisième solvant chargé en gaz acides,
c) on détend le solvant chargé en gaz acides obtenu à l'étape a) pour libérer des gaz acides et pour obtenir un solvant en partie régénéré,
d) on distille dans une colonne de distillation une première fraction du solvant en partie régénéré obtenu à l'étape c) pour obtenir une phase gazeuse comportant des gaz acides et le deuxième solvant,
e) on mélange une deuxième fraction du solvant en partie régénéré obtenu à l'étape c) avec un quatrième solvant prélevé en un point situé entre le fond et la tête de la colonne de distillation pour obtenir le premier solvant, le point de prélèvement étant déterminé pour que le pourcentage molaire en méthanol du premier solvant soit supérieur à celui du deuxième solvant.

2. Procédé selon la revendication 1, dans lequel le deuxième solvant contient moins de 1 % en poids de méthanol.

3. Procédé selon l'une des revendications 1 et 2, dans lequel à l'étape c), le solvant chargé en gaz acide obtenu à l'étape a) est détendu successivement à deux niveaux de pression.

4. Procédé selon l'une des revendications 1 à 3, dans lequel:
f) on refroidit le gaz obtenu à l'étape b) pour obtenir un gaz pauvre en méthanol, une phase liquide contenant des hydrocarbures et une phase aqueuse comprenant du méthanol,
g) avant l'étape a), on met en contact une partie du gaz naturel avec la phase aqueuse obtenu à l'étape f).

5. Procédé selon l'une des revendications 1 à 4, dans lequel, avant l'étape d), la première fraction du solvant en partie régénéré obtenu à l'étape c) est détendue, puis chauffée par échange de chaleur avec le deuxième solvant obtenu à l'étape d).

6. Procédé selon l'une des revendications 1 à 5, dans lequel, une troisième fraction du solvant en partie régénéré obtenu à l'étape c) est introduite dans la colonne de distillation, le point d'introduction dans la colonne de distillation de la première fraction du solvant en partie régénéré étant différent du point d'introduction dans la colonne de distillation de la troisième fraction du solvant en partie régénéré.

7. Procédé selon l'une des revendications 1 à 6, dans lequel l'amine est choisie parmi les composés diéthanolamine, méthyldiéthanolamine, méthyléthanolamine, triéthanolamine, diglycolamine et diisopropanolamine.

8. Procédé selon l'une des revendications 1 à 7, dans lequel:
h) on refroidit la phase gazeuse comportant des gaz acides obtenue à l'étape d) pour obtenir une phase liquide et une phase gazeuse riche en gaz acides, la phase liquide étant séparée de la phase gazeuse dans un ballon de séparation,
i) on refroidi la phase gazeuse riche en gaz acides obtenue à l'étape h) et les gaz acides libérés à l'étape c) pour obtenir une phase liquide et une phase gazeuse,
j) on introduit la phase liquide obtenue à l'étape i) dans le ballon de séparation.

9. Procédé selon l'une des revendications 1 à 8, dans lequel:
les étapes a) et b) sont réalisées à une température comprise entre 20°C et 80°C et à une pression comprise entre 3 MPa absolu et 10 MPa absolu,
à l'étape c), le solvant chargé en gaz acides obtenu à l'étape a) est détendu à une pression comprise entre 0,1 MPa absolu et 1 MPa absolu,
l'étape d) est réalisée à une température comprise entre 30°C et 130°C et à une pression comprise entre 0,1 MPa absolu et 1 MPa absolu.

## Claims

1. A method of deacidifying a natural gas comprising acid gases, wherein there are carried out the steps of:
(a) bringing the natural gas into contact with a first solvent including methanol, water and an amine obtained in stap e), and with a third solvent charged with acid gases obtained in step b) in order to obtain a gas charged with methanol and a solvent charged with acid gases,
(b) bringing the gas obtained in step a) into contact with a second solvent including methanol, water and an amino obtained in step d), in order to obtain a gas partially free of acid gases and the third solvent charged with acid gases,
(c) expanding the solvent, which is charged with acid gases and which is obtained in step a), in order to release acid gases and to obtain a partially regenerated solvent,
(d) distilling in a distillation column a first fraction of the partially regenerated solvent obtained in step c) in order to obtain a gaseous phase comprising acid gases and the second solvent,
(e) mixing a second fraction of the partially regenerated solvent obtained in step c) with a fourth solvent drawn off at a point located between the bottom and the head of the distillation column in order to obtain the first solvent, the draw-off point being determined such that the methanol molar percentage of the first solvent is greater than that of the second solvent.

2. The method according to claim 1, wherein the second solvent contains less than 1% by weight of methanol.

3. The method according to one of claims 1 and 2, wherein, in step c), the solvent, which is charged with acid gas and which is obtained in stop a), is successively expanded to two pressure levels.

4. The method according to one of claims 1 to 3, wherein:
(f) the gas obtained in step b) is cooled in order to obtain a gas which is low in methanol, a liquid phase containing hydrocarbons and an aqueous phase including methanol,
(g) prior to step a), part of the natural gas is brought into contact with the aqueous phase obtained in step f).

5. The method according to one of claims 1 to 4, wherein, before stop d), the first fraction of the partially regenerated solvent obtained in step c) is expanded, then heated by heat exchange with the second solvent obtained in step d).

6. The method according to one of claims 1 to 5, wherein a third fraction of the partially regenerated solvent obtained in step c) is introduced into the distillation column, the point of introduction into the distillation column of the first fraction of the partially regenerated solvent being different from the point of introduction into the distillation column of the third fraction of the partially regenerated solvent.

7. The method according to one of claims 1 to 6, wherein the amine is selected from the compounds diethanolamine, methyldiethanolamine, methylethanolamine, triethanolamine, diglycolamine and diisopropanolamine.

8. The method according to one of claims 1 to 7, wherein:
(h) the gaseous phase, which comprises acid gases and which is obtained in step d), is cooled in order to obtain a liquid phase and a gaseous phase which is rich in add gases, the liquid phase being separated from the gaseous phase in a separating tank,
(i) the gaseous phase, which is rich in acid gases and which is obtained in step h), and the acid gases released in step c) are cooled in order to obtain a liquid phase and a gaseous phase.
(j) the liquid phase obtained in step i) is introduced into the separating tank.

9. The method according to one of claims 1 to 8, wherein:
steps a) and b) are carried out at a temperature of between 20°C and 80°C and at a pressure of between 3 MPa absolute and 10 MPa absolute,
in step c), the solvent, which is charged with acid gases and which is obtained in step a), is expanded to a pressure of between 0.1 MPa absolute and 1 MPa absolute,
step d) is carried out at a temperature of between 30°C and 130°C and at a pressure of between 0.1 MPa absolute and 1 MPa absolute.

## Patentansprüche

1. Verfahren zur Entsäuerung eines Erdgases, das Sauergase umfasst, wobei die folgenden Schritte ausgeführt werden:
a) In-Kontakt-Bringen des Erdgases mit einem ersten Lösemittel, das Methanol, Wasser und ein Amin umfasst, das in Schritt e) erhalten wurde, und mit einem dritten Lösemittel, das mit Sauergasen beladen ist, das in Schritt b) erhalten wurde, um ein Gas, das mit Methanol beladen ist, und ein Lösemittel, das mit den Sauergasen beladen ist, zu erhalten.
b) In-Kontakt-Bringen des Gases, das in Schritt a) erhalten wurde, mit einem zweiten Lösemittel, das Methanol, Wasser und ein Amin umfasst, das in Schritt d) erhalten wurde, um ein Gas, das teilweise von Sauergasen befreit ist und das dritte Lösemittel, das mit Sauergasen beladen ist, zu erhalten,
c) Entspannen des Lösemittels, das mit Sauergasen beladen ist, das in Schritt a) erhalten wurde, um Sauergase freizusetzen und um ein teilweise regeneriertes Lösemittel zu erhalten,
d) Destillieren in einer Destillationssäule einer ersten Fraktion des teilweise regenerierten Lösemittels, das in Schritt c) erhalten wurde, um eine gasförmige Phase, die Sauergase umfasst, und das zweite Lösemittel zu erhalten,
e) Mischen einer zweiten Fraktion des teilweise regenerierten Lösemittels, das in Schritt c) erhalten wurde, mit einem vierten Lösemittel, das an einem Punkt entnommen wird, der zwischen dem Boden und dem Kopf der Destillationssäule liegt, um das erste Lösemittel zu erhalten, wobei der Entnahmepunkt so bestimmt ist, dass der Methanolanteil in Molprozent des ersten Lösemittels größer als derjenige des zweiten Lösemittels ist.

2. Verfahren nach Anspruch 1, wobei das zweite Lösemittel weniger als 1 Gew.-% Methanol enthält.

3. Verfahren nach einem der Ansprüche 1 und 2, wobei in Schritt c) das mit Sauergas beladene Lösemittel, das in Schritt a) erhalten wurde, nacheinander mit zwei Druckpegeln entspannt wird.

4. Verfahren nach einem der Ansprüche 1 bis 3, wobei:
f) das in Schritt b) erhaltene Gas abgekühlt wird, um ein an Methanol verarmtes Gas, eine flüssige Phase, die Kohlenwasserstoffe enthält, und eine wässrige Phase, die Methanol umfasst, zu erhalten,
g) vor Schritt a) ein Teils des Erdgases mit der wässrigen Phase, die in Schritt f) erhalten wurde, in Kontakt gebracht wird.

5. Verfahren nach einem der Ansprüche 1 bis 4, wobei vor Schritt d) die erste Fraktion des teilweise regenerierten Lösemittels, das in Schritt c) erhalten wurde, entspannt, dann durch Wärmeaustausch mit dem zweiten Lösemittel, das in Schritt d) erhalten wurde, erwärmt wird.

6. Verfahren nach einem der Ansprüche 1 bis 5, wobei eine dritte Fraktion des teilweise regenerierten Lösemittels, das in Schritt c) erhalten wurde, in die Destillationssäule eingeführt wird, wobei der Einführungspunkt in die Destillationssäule der ersten Fraktion des teilweise regenerierten Lösemittels verschieden von dem Einführungspunkt in die Destillationssäule der dritten Fraktion des teilweise regenerierten Lösemittels ist.

7. Verfahren nach einem der Ansprüche 1 bis 6, wobei das Amin aus den Diethanolamin-, Methyldiethanolamin-, Methylethanolamin-, Triethanolamin-, Diglycolamin- und Diisopropanolaminverbindungen ausgewählt ist.

8. Verfahren nach einem der Ansprüche 1 bis 7, wobei:
h) die gasförmige Phase, die Sauergase umfasst, die in Schritt d) erhalten wurde, abgekühlt wird, um eine flüssige Phase und eine gasförmige Phase, die reich an Sauergasen ist, zu erhalten, wobei die flüssige Phase von der gasförmigen Phase in einem Trennkolben getrennt wird,
i) die gasförmige Phase, die reich an Sauergasen ist, die in Schritt h) erhalten wurde, und die Sauergase, die in Schritt c) freigesetzt wurden, abgekühlt werden, um eine flüssige Phase und eine gasförmige Phase zu erhalten,
j) die flüssige Phase, die in Schritt i) erhalten wurde, in den Trennkolben eingeführt wird.

9. Verfahren nach einem der Ansprüche 1 bis 8, wobei:
die Schritte a) und b) bei einer Temperatur im Bereich zwischen 20 °C und 80 °C und bei einem Druck im Bereich zwischen 3 MPa absolut und 10 MPa absolut durchgeführt werden,
in Schritt c), das Lösemittel, das mit Sauergasen beladen ist, das in Schritt a) erhalten wurde, bei einem Druck im Bereich zwischen 0,1 MPa absolut und 1 MPa absolut entspannt wird,
Schritt d) bei einer Temperatur im Bereich zwischen 30 °C und 130 °C und bei einem Druck im Bereich zwischen 0,1 MPa absolut und 1 MPa absolut durchgeführt wird.
